# EUROPÄISCHE PATENTSCHRIFT

(11) **EP 3 011 884 B1**
(45) Veröffentlichungstag und Bekanntmachung des Hinweises auf die Patenterteilung: **19.06.2019**
(21) Anmeldenummer: 15190374.7
(22) Anmeldetag: 19.10.2015
(51) Int. Cl.: A47L 11/40, A47L 11/22, F16D 41/00, F16D 41/07

(54) **HANDGEFÜHRTE KEHRMASCHINE UND VERWENDUNG EINES KUPPLUNGSRINGS IN EINER HANDGEFÜHRTE KEHRMASCHINE**
HAND-CONTROLLED SWEEPING MACHINE AND USE OF A COUPLING RING IN A HAND-HELD SWEEPING MACHINE
BALAYEUSE MANUELLE ET UTILISATION D'UNE BAGUE D'ACCOUPLEMENT DANS UNE BALAYEUSE MANUELLE

(30) Priorität: 22.10.2014 DE 202014008544 U
(43) Veröffentlichungstag der Anmeldung: 27.04.2016
(73) Patentinhaber: Haaga Kehrsysteme GmbH, 73230 Kirchheim/Teck (DE)
(72) Erfinder: Bruntner, Eugen, 73278 Schlierbach (DE); Link, Klaus, 73329 Kuchen/Fils (DE)
(74) Vertreter: Patentanwälte Ruff, Wilhelm, Beier, Dauster & Partner mbB

(56) Entgegenhaltungen:
- AT-B- 391 797
- DE-A1- 10 309 991
- DE-A1-102006 039 700
- DE-A1-102007 055 458
- US-A- 4 317 253
- US-A1- 2010 299 868

## Beschreibung

### ANWENDUNGSGEBIET UND STAND DER TECHNIK

Die Erfindung betrifft eine handgeführte Kehrmaschine umfassend mindestens ein um eine Drehachse rotierbar gelagertes Kehrmittel, mindestens ein dem mindestens einen Kehrmittel zugeordnetes Antriebsmittel, mittels welchem das Kehrmittel zur Rotation um die Drehachse antreibbar ist, und eine zwischen dem mindestens einen Kehrmittel und dem mindestens einen zugeordneten Antriebsmittel vorgesehene Freilauf-Kupplungseinrichtung.

Handgeführte Kehrmaschinen weisen als Kehrmittel beispielsweise eine Kehrwalze und/oder ein oder zwei im Frontbereich eines Gehäuses angebrachte Tellerbesen auf. Als Antrieb ist beispielsweise ein Elektromotor vorgesehen. Alternativ oder zusätzlich sind Antriebsmittel bekannt, die aus den Verfahrbewegungen abgeleitete Antriebskräfte auf das Kehrmittel übertragen. Dabei ist es wünschenswert, dass bei einer Rückwärtsbewegung das Kehrmittel nicht zur Rotation mit umgekehrter Drehrichtung angetrieben wird und/oder eine Antriebskräfte eines Antriebsmittels nicht über das Kehrmittel auf das zweite Antriebsmittel übertragen werden. Es ist daher beispielsweise aus DE 103 09 991 A1 bekannt, zwischen Antriebsmitteln, die von Verfahrbewegungen abgeleitete Antriebskräfte übertragen, und den Tellerbesen und/oder zwischen motorischen Antriebsmitteln und den Tellerbesen eine ein Vorlaufen der Tellerbesen gegenüber den Antriebsmitteln gestattende Überlaufkupplung anzuordnen.

Aus DE 41 20 871 A1 ist eine handgeführte Kehrmaschine mit einer Kehrwalze bekannt, wobei die Kehrwalze mit den Fahrrädern über auf Freiläufen sitzenden Rädern gekoppelt ist, so dass die Kehrwalze sowohl bei Vorwärts- als auch bei Rückwärtsfahrt in der gleichen Drehrichtung angetrieben wird, und wobei auf jedem Ende der Drehachse der Kehrwalze zwei Räder auf in gleicher Richtung wirkenden Freiläufen angeordnet sind, die bei Drehung des benachbarten Fahrrades in entgegengesetzten Richtungen gedreht werden.

Aus AT 391 797 B ist eine Kupplung für Bürsten von Fußbodenreinigungsgeräten, insbesondere Elektroteppichbürsten, bekannt, wobei die Bürsten mittels einer in ihrem Inneren verlaufenden Welle angetrieben werden, wobei eine S-förmig gebogene Feder für eine Kraft- und Bewegungsübertragung von der Welle auf die Bürste vorgesehen ist.

Aus US 4,317,253 oder US 2010/0299868 A1 sind Kupplungen für Staubsauger bekannt. Eine Freilauf-Kupplungseinrichtung für eine handgeführte Kehrmaschine ist beispielsweise auch in DE 10 2006 039 700 A1 beschrieben.

### AUFGABE UND LÖSUNG

Es ist eine Aufgabe der Erfindung, eine handgeführte Kehrmaschine mit einer kleinbauenden, kostengünstig herstellbaren Freilauf-Kupplungseinrichtung zu schaffen.

Gemäß Anspruch 1 wird eine Kehrmaschine umfassend mindestens ein um eine Drehachse rotierbar gelagertes Kehrmittel, mindestens ein dem mindestens einen Kehrmittel zugeordnetes Antriebsmittel, mittels welchem das Kehrmittel zur Rotation um die Drehachse antreibbar ist, und eine zwischen dem mindestens einen Kehrmittel und dem mindestens einen zugeordneten Antriebsmittel vorgesehene Freilauf-Kupplungseinrichtung geschaffen, wobei die Freilauf-Kupplungseinrichtung eine Kupplungshülse und einen in der Kupplungshülse für eine unidirektionale Bewegungsübertragung aufgenommen Kupplungsring umfasst, und wobei der Kupplungsring mehrere daran angeformte, elastisch verformbare, in Richtung der Kupplungshülse abragende Lamellen aufweist. Vorzugsweise sind die Lamellen über den Umfang gleichmäßig verteilt.

Eine derartige Freilauf-Kupplungseinrichtung oder Überhol-Kupplungseinrichtung ist kleinbauend fertigbar. Die Lamellen erlauben eine Bewegungs- oder Drehmomentenübertragung des Kupplungsrings auf die diesen aufnehmende Kupplungshülse bei einer Bewegung des Kupplungsrings in Richtung der Lamellen. Bei einer Bewegung der Kupplungshülse relativ zu dem Kupplungsring in die gleiche Richtung erfolgt dagegen keine Bewegungs- oder Drehmomentenübertragung. Ein Spalt zwischen der Kupplungshülse und dem Kupplungsring und/oder ein Winkel, mit welchem die Lamellen von dem Kupplungsring abragen, sind durch den Fachmann geeignet wählbar.

Der Kupplungsring ist aus Kunststoff. Vorzugsweise ist der Kupplungsring aus einem dauerelastischen Kunststoff. Ein geeigneter Kunststoff ist beispielsweise Polyurethan (PUR). Ein PUR-Kupplungsring ist beispielsweise durch Spritzguss fertigbar.

In einer Ausgestaltung weist die Kupplungshülse eine glatte Mantelinnenfläche auf. Eine Bewegungs- oder Drehmomentenübertragung erfolgt dabei aufgrund von Reibungskräften. Ein maximal übertragbares Drehmoment hängt dabei von einem Winkel der Lamellen, einer Größe des Spalts zwischen der Kupplungshülse und dem Kupplungsring und/oder einer Materialkombination ab.

In vorteilhaften Ausgestaltungen weist die Kupplungshülse radial nach innen ragende Kupplungsnocken auf, wobei in einer ersten Relativdrehrichtung die Lamellen die Kupplungsnocken überlaufen und in einer entgegengesetzten zweiten Relativdrehrichtung die Lamellen und die Kupplungsnocken formschlüssig für eine Bewegungs- oder Drehmomentenübertragung zusammenwirken. Eine derartige Kupplungseinrichtung zeichnet sich durch eine hohe Zuverlässigkeit aus. Die Anzahl der Kupplungsnocken entspricht vorzugsweise der Anzahl der Lamellen. Es sind jedoch auch Ausgestaltungen denkbar, bei welchen die Anzahl der Kupplungsnocken von der Anzahl der Lamellen abweicht.

In einer Ausgestaltung der handgeführte Kehrmaschine ist das mindestens eine Kehrmittel als Kehrwalze gestaltet. Die Kehrwalze ist um eine parallel zum Boden und senkrecht zur Verfahrerichtung angeordnete Drehachse rotierbar gelagert. Sie umfasst einen Walzenkörper, welcher mit einer Vielzahl an Borsten bestückt ist. Die Kehrwalze dreht vorzugsweise entgegen der Verfahrrichtung für eine effektive Kehrwirkung.

In einer vorteilhaften Ausgestaltung ist vorgesehen, dass die Kupplungshülse einteilig mit der Kehrwalze gestaltet. Die Kupplungshülse ist vorzugsweise einteilig mit dem Walzenkörper als Spritzgussteil gefertigt.

Die Antriebsmittel umfassen in vorteilhaften Ausgestaltungen ein koaxial zu der Kehrwalze angeordnetes, von einem Laufrad der Kehrmaschine und/oder motorisch antreibbares Antriebsrad, wobei der Kupplungsring drehfest mit dem Antriebsrad verbunden ist. Das Antriebsrad ist beispielsweise mittels eines motorischen Antriebs, insbesondere eines Elektromotors antreibbar. In anderen Ausgestaltungen kämmt das Antriebsrad alternativ oder zusätzlich mit einem Laufrad der Kehrmaschine für einen von der Verfahrbewegung abgeleiteten Antrieb der Kehrwalze.

In einer anderen Ausgestaltung ist das mindestens eine Kehrmittel als Tellerbesen gestaltet. In vorteilhaften Ausgestaltungen sind an der Kehrmaschine drei Kehrmittel, nämlich zwei Tellerbesen und eine Kehrwalze vorgesehen. Es sind aber auch Ausgestaltungen denkbar, welche lediglich zwei Tellerbesen, einen Tellerbesen und eine Kehrwalze oder lediglich eine Kehrwalze umfassen.

Der mindestens eine Tellerbesen ist je nach Ausgestaltung motorisch oder durch Bewegung der Kehrmaschine in eine Rotation um eine im Wesentlichen vertikale Drehachse versetzbar.

Der Tellerbesen weist in üblichen Ausgestaltungen einen vorzugsweise becherförmigen Grundkörper auf, von welchem Borsten abragen. In vorteilhaften Ausgestaltungen ist der Kupplungsring der Freilauf-Kupplungseinrichtung zwischen dem Tellerbesen und dem mindestens einen Antriebsmittel drehfest mit dem Grundkörper des Tellerbesens verbunden. Vorzugsweise weist der Grundkörper zu diesem Zweck einen Verbindungszapfen auf.

In vorteilhaften Ausgestaltungen sind dem Tellerbesen zwei Antriebsmittel zugeordnet, wobei zwischen dem Tellerbesen und den zwei zugeordneten Antriebsmitteln jeweils eine Freilauf-Kupplungseinrichtung vorgesehen, welche eine Kupplungshülse und einen in der Kupplungshülse für eine unidirektionale Bewegungsübertragung aufgenommen Kupplungsring mit mindestens einer, vorzugsweise mehreren daran angeformten, elastisch verformbaren, in Richtung der Kupplungshülse abragenden Lamelle(n) umfasst.

Dabei ist in einer Ausgestaltung vorgesehen, dass den Tellerbesen jeweils ein von dem Grundkörper aufgenommener Motor oder ein gemeinsamer Motor zugeordnet ist. In vorteilhaften Ausgestaltungen sind die zwei Antriebsmittel und entsprechend die zwei Freilauf-Kupplungseinrichtungen an gegenüberliegenden Seiten des Grundkörpers des Tellerbesens angeordnet.

Das Antriebsmittel oder die Antriebsmittel umfasst/umfassen in vorteilhaften Ausgestaltungen eine von einer Laufrolle des Tellerbesens angetriebene Zahnhülse und/oder ein motorisch, insbesondere mittels Elektromotor, angetriebener Zahnkranz.

Gemäß Anspruch 14 wird die Verwendung eines Kupplungsrings mit daran angeformten, elastisch verformbaren, unter einem Winkel abragenden Lamellen in einer Freilauf-Kupplungseinrichtung einer handgeführten Kehrmaschine vorgesehen. Die Lamellen ragen unter einem zwischen der Tangentialrichtung und der Radialrichtung durch den Fachmann geeignet wählbaren Winkel ab. Für ein sicheres Überfahren von Kupplungsnocken ist in einer Ausgestaltung vorgesehen, dass die Lamellen zumindest nahezu tangetial abragen.

### KURZBESCHREIBUNG DER ZEICHNUNGEN

Weitere Vorteile der Erfindung ergeben sich aus den Unteransprüchen und aus der nachfolgenden Beschreibung eines Ausführungsbeispiels der Erfindung, das in den Zeichnungen schematisch dargestellt ist. Für gleiche oder ähnliche Bauteile werden in den Zeichnungen einheitliche Bezugszeichen verwendet.

Dabei zeigen:
- Fig. 1:: eine Kehrmaschine in einer Seitenansicht;
- Fig. 2:: einen Tellerbesen der Kehrmaschine gemäß Fig. 1 in einer geschnittenen Seitenansicht;
- Fig. 3:: eine Kupplungshülse des Tellerbesens gemäß Fig. 2 in einer perspektivischen Darstellung;
- Fig. 4:: eine Oberseite eines Grundkörpers des Tellerbesens gemäß Fig. 2 in einer perspektivischen Darstellung;
- Fig. 5:: ein Ende der Kehrwalze der Kehrmaschine gemäß Fig. 1 in einer perspektivischen Darstellung;
- Fig. 6:: ein Antriebsrad für die Kehrwalze der Kehrmaschine gemäß Fig. 1 in einer perspektivischen Darstellung und
- Fig. 7:: das Ende der Kehrwalze gemäß Fig. 5 in einer perspektivischen Darstellung mit einem eingelegten Kupplungsring.

### DETAILLIERTE BESCHREIBUNG DER AUSFÜHRUNGSBEISPIELE

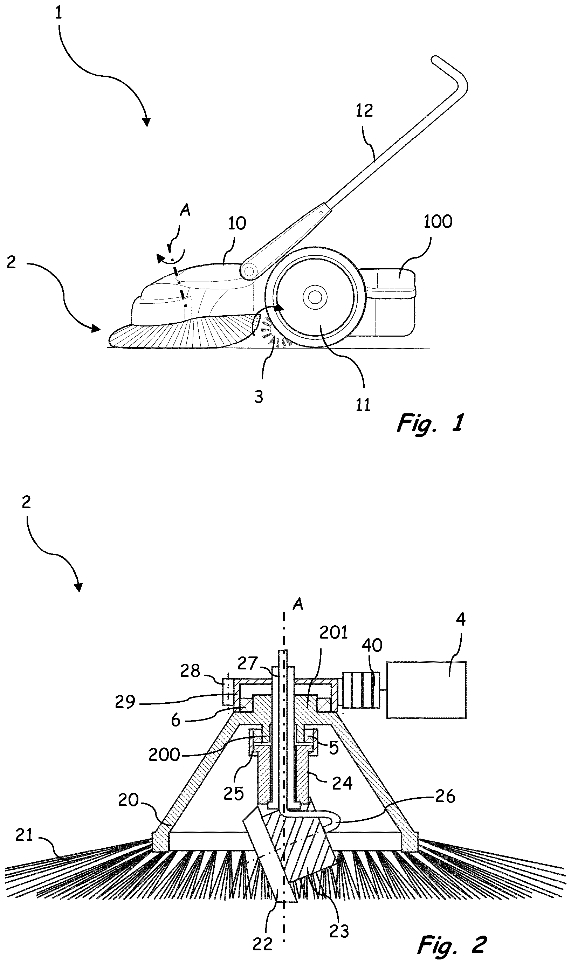

Fig. 1 zeigt schematisch eine Kehrmaschine 1 in einer Seitenansicht. Die Kehrmaschine 1 besitzt ein Gehäuse 10 mit Laufrädern 11 und mit einem Schiebegriff 12 für eine Handführung der Kehrmaschine 1. Das Gehäuse 10 ist in seinem Frontbereich mit zwei Tellerbesen 2 versehen, von denen in Fig. 1 nur einer sichtbar ist. Die Tellerbesen 2 rotieren mit entgegengesetzter Drehrichtung nach innen um schräg nach vorne geneigte Drehachsen A. Ein Neigungswinkel der Drehachse A der Tellerbesen 2 gegenüber der Vertikalen beträgt in vorteilhaften Ausgestaltungen ca. 5° bis ca. 15°, sodass Borsten der Tellerbesen 2 etwa mit dem vorderen Drittel des Umfangs der Tellerbesen 2 auf dem zu kehrenden Boden aufliegen.

Die Tellerbesen 2 kehren ein Kehrgut über eine nicht sichtbare, schräg nach innen ansteigende Kehrplatte in das Innere des Gehäuses 10, genauer in einen als Sammelbehälter 100 dienenden hinteren Bereich.

In der normalen Verfahrrichtung der Kehrmaschine 1 folgt in dem dargestellten Ausführungsbeispiel den Tellerbesen 2 und der Kehrplatte eine Kehrwalze 3 nach, die den zu kehrenden Boden mit Kehrwirkung überstreicht. Die Kehrwalze 3 hat mehrere Funktionen. Zum einen übernimmt die Kehrwalze 3 das von den Tellerbesen 2 über die Kehrplatte herangeförderte Kehrgut, beschleunigt dieses und wirft es in Richtung des Sammelbehälters 100. Zum anderen kehrt die Kehrwalze 3 den zu kehrenden Boden in dem mittleren Bereich der Kehrmaschine 1, d. h. in dem Bereich zwischen den Tellerbesen 2. Die Kehrwalze 3 nimmt insbesondere feines Kehrgut auf, das von den Tellerbesen 2 zu dem mittleren Bereich der Kehrmaschine 1 gekehrt und nicht bereits über die Kehrplatte mitgenommen wurde. Diesen Teil des Kehrgutes nimmt die Kehrwalze 3 auf und schleudert diesen ebenfalls nach hinten in den als Sammelbehälter 100 dienenden Teil des Gehäuses 10.

Für einen Transport des Kehrguts in den Sammelbehälter 100 rotieren die Tellerbesen 2 gegenläufig nach innen, sodass ein Geschwindigkeitsvektor der einander zugewandten oder berührenden Borsten der zwei Tellerbesen 2 zu dem Sammelbehälter 100 gerichtet ist. Eine Rotation des sichtbaren in Verfahrrichtung links angeordneten Tellerbesens 2 im Uhrzeigersinn um die Drehachse A ist schematisch durch einen Pfeil dargestellt. Die Kehrwalze 3 rotiert für eine Übernahme des Kehrguts und einen Transport des Kehrguts zu dem Sammelbehälter 100 wie schematisch durch einen Pfeil dargestellt entgegen der Abrollbewegung des Laufrads 11 bei einer Vorwärtsbewegung. Ein Antrieb der Tellerbesen 2 und/oder Kehrwalze 3 wird von einer Bewegung der Kehrmaschine 1 abgeleitet und/oder erfolgt mittels eines Motors, insbesondere eines Elektromotors. Dabei sind Vorkehrungen getroffen, um zu verhindern, dass bei einer Umkehr der Verfahrrichtung der Kehrmaschine 1 die Tellerbesen 2 und/oder Kehrwalze 3 in einer abweichenden Richtung rotieren.

Fig. 2 zeigt schematisch einen Tellerbesen 2 in einer geschnittenen Seitenansicht. Der Tellerbesen 2 weist einen Grundkörper 20 und daran angeordnete Borsten 21 auf. Dem dargestellten Tellerbesen 2 sind zwei Antriebsmittel für einen aus der Bewegung abgeleiteten und/oder einen motorischen Antrieb zugeordnet.

Ein aus der Verfahrbewegung abgeleiteter Antrieb der Tellerbesen 2 erfolgt beispielsweise in einer Art und Weise, wie es aus DE 22 62 648 C bekannt ist. Hierzu sind innerhalb der Tellerbesen 2 Laufrollen 22 angeordnet, die die Tellerbesen 2 unabhängig von der Verfahrrichtung jeweils so antreiben, dass sie von außen nach innen kehren. Die Laufrollen 22 sind jeweils drehfest an einem Schrägzahnrad 23 angeordnet. Insbesondere sind die Laufrollen 22 und die Schrägzahnräder 23 in einer Ausgestaltung als gemeinsames Bauteil gefertigt.

Das Schrägzahnrad 23 wirkt mit einer konzentrisch zu dem Grundkörper 21 angeordneten Zahnhülse 24 zusammen, welcher ihrerseits drehfest mit einer Kupplungshülse 25 verbunden oder einteilig mit dieser gefertigt ist. Die Zahnhülse 24 dient als erstes Antriebsmittel, wobei hierzu die Kupplungshülse 25 mit einem Kupplungsring 5 eine Freilauf-Kupplungseinrichtung bildet, mittels welcher die Zahnhülse 24 mit dem Grundkörper 20 des Tellerbesens 2 antreibend verbindbar. Die Laufrolle 22 mit dem Schrägzahnrad 23 und die Zahnhülse 24 sind mittels eines Achshalters 26 und eines Lagerzapfens 27 an einem Gehäuse 10 der Kehrmaschine 1 gemäß Fig. 1 gelagert.

Dem Tellerbesen 2 ist weiter ein als Elektromotor 4 gestalteter motorischer Antrieb mit einem Ritzel 40 zugeordnet. Das Ritzel 40 treibt einen als zweites Antriebsmittel fungierenden Zahnkranz 28 an. Der Zahnkranz 28 ist einteilig mit einer Kupplungshülse 29 gefertigt, welcher zusammen mit einem Kupplungsring 6 eine weitere Freilauf-Kupplungseinrichtung bildet, über welcher der Antrieb mit dem Grundkörper 20 des Tellerbesens 2 antreibend verbindbar ist. Das Ritzel 40 ist in einer Ausgestaltung als Schnecke gestaltet, welche mit einem als Schneckenrad gebildeten Zahnkranz 28 zusammenwirkt. In anderen Ausgestaltungen ist eine Drehachse des Ritzels 40 parallel zu einer Drehachse des Zahnkranzes 28, wobei das Ritzel 40 und der Zahnkranz 29 als Zylinderzahnräder gestaltet sind.

Bei einem elektromotorischen Antrieb des Tellerbesens 2 ohne Verfahrbewegung, d.h. im Stillstand der Laufrolle 22, wird der Zahnkranz 28 zur Rotation angetrieben, wobei mittels der durch die Kupplungshülse 29 und den Kupplungsring 6 gebildeten Freilauf-Kupplungseinrichtung eine Übertragung auf den Grundkörper 20 erfolgt und mittels der durch die Kupplungshülse 25 und den Kupplungsring 5 gebildeten Freilauf-Kupplungseinrichtung eine Übertragung von dem Grundkörper 20 auf die Zahnhülse 24 und damit auf die Laufrolle 22 verhindert wird. Umgekehrt wird bei einem Antrieb des Tellerbesens 2 durch die Verfahrbewegung ohne motorischen Antrieb der Grundkörper 20 mittels der Zahnhülse 24 und der damit drehfest gekoppelten Kupplungshülse 25 und den Kupplungsring 5 zur Rotation angetrieben, wobei mittels der zwischen dem Grundkörper 20 und der dem Zahnkranz 28 angeordneten, durch die Kupplungshülse 29 und den Kupplungsring 6 gebildeten Freilauf-Kupplungseinrichtung eine Übertragung der Bewegung auf das Ritzel 40 verhindert wird.

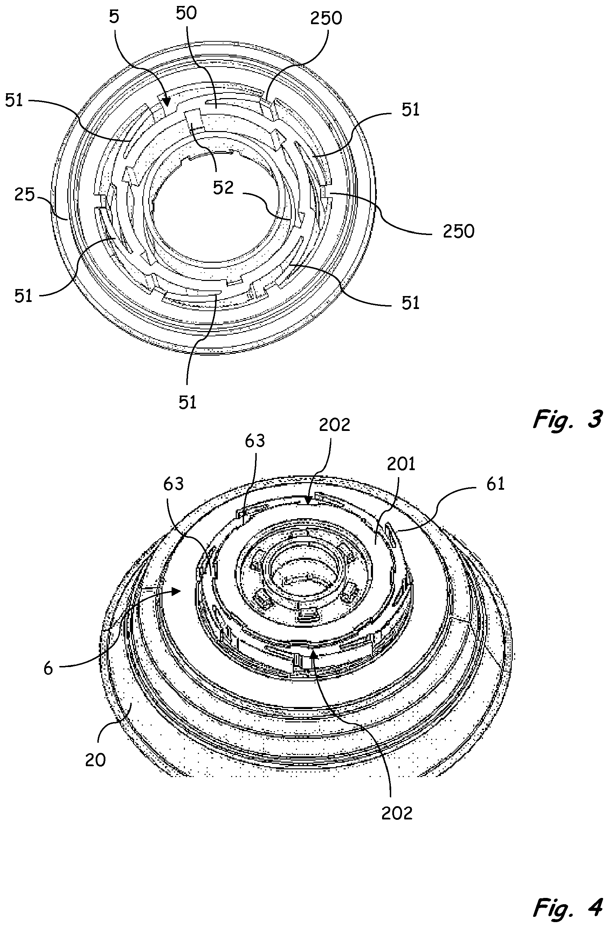

Die Freilauf-Kupplungseinrichtungen sind an gegenüberliegenden Seiten des Grundkörpers 20 des Tellerbesens 2 angeordnet. Sie umfassen jeweils einen nachfolgend in Bezug auf die Figuren 3 und 4 beschriebenen, mit den Kupplungshülse 25 bzw. 28 für eine unidirektionale Bewegungsübertragung zusammenwirkenden Kupplungsring 5, 6. Der Grundkörper 20 weist zwei Verbindungszapfen 200, 201 zur drehfesten Verbindung mit den Kupplungsringen 5, 6 auf. Fig. 3 zeigt schematisch in einer perspektivischen Darstellung die dem Antrieb aus der Verfahrbewegung zugeordnete Freilauf-Kupplungseinrichtung des Tellerbesens 2 gemäß Fig. 2 umfassend die Kupplungshülse 25 mit einem darin eingelegten Kupplungsring 5. Der Kupplungsring 5 ist aus Kunststoff, insbesondere als Spritzgussteil und weist mehrere, in dem dargestellten Ausführungsbeispiel sechs, daran angeformte, elastisch verformbare, in Richtung der Kupplungshülse 25 abragende Lamellen 51 auf. Die Lamellen 51 ragen in dem dargestellten Ausführungsbeispiel nahezu tangential von dem Ringkörper 50 des Kupplungsrings 5 ab.

Der Kupplungsring 5 ist mit dem in Fig. 2 schematisch dargestellten Grundkörper 20 des Tellerbesens 2 drehfest verbindbar. Zu diesem Zweck weist der dargestellte Kupplungsring 5 an einer Innenseite des Ringkörpers 50 mehrere, in dem dargestellten Ausführungsbeispiel sechs, über den Umfang verteilte Führungsnuten 52 auf, in welche entsprechende Vorsprünge an dem nach unten ragenden Verbindungszapfen 200 des Grundkörpers 20 (vgl. Fig. 2) greifen. Wie für den Fachmann erkennbar, sind andere zerstörungsfrei lösbare oder dauerhaften Verbindungsarten denkbar.

Die Kupplungshülse 25 weist radial nach innen ragende Kupplungsnocken 250 auf. Bei einer Drehbewegung des Kupplungsgehäuses 25 in eine erste Richtung, in dem dargestellten Ausführungsbeispiel gegen den Uhrzeigersinn, treffen die Kupplungsnocken 250 auf die freien Enden der Lamellen 51, sodass die Lamellen 51 und die Kupplungsnocken 250 formschlüssig für eine Bewegungsübertragung zusammenwirken. Bei einer Relativdrehung in die entgegengesetzte Richtung überlaufen dagegen die Lamellen 51 die Kupplungsnocken 250, sodass keine Drehbewegung übertragen wird. Sofern der Kupplungsring 5 in umgekehrter Lage in dem Kupplungsgehäuse 25 verbaut wird, erfolgt eine Bewegungsübertragung bei einer Drehbewegung des Kupplungsgehäuses 25 im Uhrzeigersinn. Dadurch sind einheitliche Bauteile zum Antrieb der zwei Tellerbesen 2 der Kehrmaschine 1 mit entgegengesetztem Drehsinn einsetzbar.

Fig. 4 zeigt schematisch eine Oberseite des Grundkörpers 20 des Tellerbesens 2 gemäß Fig. 2 in einer perspektivischen Darstellung. An der Oberseite des Grundkörpers 20 ist der Verbindungszapfen 201 zur drehfesten Verbindung mit dem Kupplungsring 6 vorgesehen. Der Kupplungsring 6 gemäß Fig. 4 ist ähnlich dem Kupplungsring 5 gemäß Fig. 4 und ebenfalls mit mehreren, in dem dargestellten Ausführungsbeispiel mit acht, daran angeformten, elastisch verformbaren, zumindest nahezu tangential abragenden Lamellen 61 versehen. Im Unterschied zu dem Kupplungsring 5 gemäß Fig. 3 weist der Kupplungsring 6 gemäß Fig. 4 an seiner Innenseiten radial nach innen ragende Vorsprünge 63 auf, welche in korrespondierende Führungsnuten 202 an dem Verbindungszapfen 201 greifen. Es ist für den Fachmann offensichtlich, dass in abweichenden Ausgestaltungen der Kupplungsring 6 Führungsnuten ähnlich Fig. 3 und/oder der Kupplungsring 5 Vorsprünge ähnlich Fig. 4 aufweisen können.

Die Lamellen 61 des Kupplungsrings 6 wirken mit Kupplungsnocken an der Kupplungshülse 29 gemäß Fig. 2 zusammen. Die Kupplungshülse 29 trägt in dem in Fig. 2 dargestellten Ausführungsbeispiel den Zahnkranz 28. In anderen Ausgestaltungen ist eine zusätzliche, mit dem Zahnkranz 28 drehfest verbundene Kupplungshülse für eine unidirektionale Bewegungsübertragung zwischen dem Zahnkranz 28 und dem Kupplungsring 6 und damit zwischen dem motorischen Antrieb 4 und dem Grundkörper 20 vorgesehen.

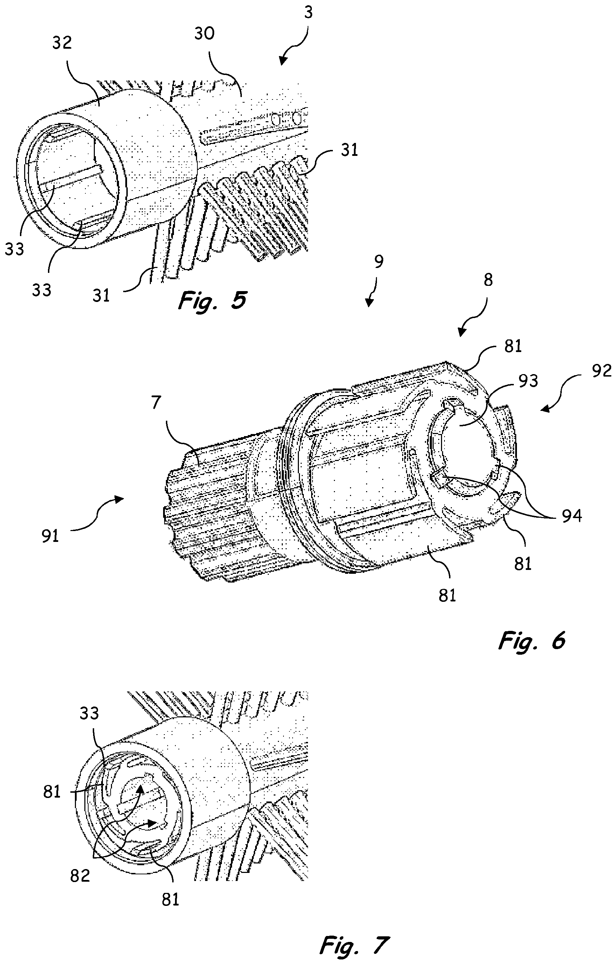

Fig. 5 bis 7 zeigen schematisch ein Ende der Kehrwalze 3 der Kehrmaschine 1 gemäß Fig. 1, ein damit für eine unidirektionale Bewegungsübertragung koppelbares Antriebsrad 7 und das Ende der Kehrwalze gemäß Fig. 5 mit einem eingelegten Kupplungsring 8, jeweils in einer perspektivischen Darstellung.

Die Kehrwalze 3 weist einen Borsten 31 tragenden Walzengrundkörper 30 auf. An mindestens einem, vorzugsweise an beiden Enden des Walzengrundkörpers 30 ist eine einteilig mit dem Walzengrundkörper 30 gefertigte Kupplungshülse 32 vorgesehen. Der Walzengrundkörper 30 mit der Kupplungshülse 32 oder den Kupplungshülsen 32 an den zwei Enden ist vorzugsweise als Spritzgussteil fertigbar. Die Kupplungshülse 32 weist mehrere, in dem dargestellten Ausführungsbeispiel sechs radial nach innen ragende Kupplungsnocken 33 auf.

Das Antriebsrad 7 ist auf einem Trägerkörper 9 angeordnet. Der Trägerkörper 9 ist achsstummelförmig mit zwei Enden 91, 92, wobei an einem Ende 91 des Trägerkörpers 9 das Antriebsrad 7 vorgesehen ist. Das Antriebsrad 7 ist einteilig mit dem Grundkörper 9 gefertigt oder drehfest mit diesem verbunden. An dem gegenüberliegenden Ende 92 des Trägerkörpers 9 ist der Kupplungsring 8 drehfest angebracht. Der Trägerkörper 9 mit dem Kupplungsring 8 ist in die Kupplungshülse 32 einführbar, wobei der Kupplungsring 8 gemeinsam mit der Kupplungshülse 32 eine Freilauf-Kupplungseinrichtung bildet.

Für eine drehfeste Verbindung des Kupplungsrings 8 und des Trägerkörpers 9 weist der Trägerkörper 9 ist einen Zapfen 93 mit drei radial nach außen weisenden Vorsprüngen 94 auf. Die Vorsprünge 94 greifen formschlüssig in korrespondierende Ausnehmungen 82 an einem Innenumfang des Kupplungsrings 8. Es ist für den Fachmann offensichtlich, dass in abweichenden Ausgestaltungen der Kupplungsring 8 radial nach innen abragende Vorsprünge ähnlich Fig. 4 aufweisen kann, welche mit Führungsnuten an dem Zapfen 93 zusammenwirken.

Der Kupplungsring 8 ist in die einteilig mit Walzengrundkörper 30 der Kehrwalze 3 ausgebildete Kupplungshülse 32 für eine unidirektionale Bewegungsübertragung einsetzbar, wie schematisch in Fig. 7 dargestellt. Der Kupplungsring 8 umfasst mehrere, in dem dargestellten Ausführungsbeispiel sechs, daran angeformte, elastisch verformbare, in Richtung der Kupplungshülse 32 abragende Lamellen 81. Die Lamellen 81 wirken mit den Kupplungsnocken 33 wie schematisch in Fig. 7 dargestellt für eine Bewegungsübertragung in eine Richtung zusammen, in der dargestellten Anordnung für eine Bewegungsübertragung bei Drehung des Kupplungsrings 8 im Uhrzeigersinn. Bei einer Drehung des Kupplungsrings 8 relativ zu der Kupplungshülse 32 in entgegengesetzter Richtung überlaufen die Lamellen 81 die Kupplungsnocken 33.

Der Rotationsantrieb der Kehrwalze 3 wird in einer Ausgestaltung von den in Fig. 1 sichtbaren Laufrädern 11 abgeleitet. Zu diesem Zweck kämmt das Antriebsrad 7 gemäß Fig. 6 mit einer an dem Laufrad 11 gemäß Fig. 1 vorgesehenen, in den Figuren nicht dargestellten Innen- oder Außenverzahnung. Alternativ oder zusätzlich ist in einer anderen Ausgestaltung vorgesehen, dass das Antriebsrad mit einem Ritzel eines Antriebsmotors zusammenwirkt.

In den Fig. 5 bis 7 ist ein in Richtung einer Verfahrbewegung links angeordnetes Ende der Kehrwalze 3 dargestellt, wobei mittels der den Kupplungsring 8 und die Kupplungshülse 32 umfassenden Freilauf-Kupplungseinrichtung eine Bewegungsübertragung eines an der Kehrmaschine 1 links angebrachten, bei einer Vorwärtsbewegung in der Seitenansicht gemäß Fig. 1 gegen den Uhrzeigersinn drehenden Laufrads 11 derart koppelbar, dass die Kehrwalze 3 in der Seitenansicht im Uhrzeigersinn dreht. Bei einer Rückwärtsbewegung der Kehrmaschine 1 ist die Bewegung des linken Laufrads 11 von der Kehrwalze dank der den Kupplungsring 8 umfassenden Freilauf-Kupplungseinrichtung entkoppelt.

Aufgrund ihrer Reibung mit dem zu kehrenden Boden wird die Kehrwalze 3 bei einer Rückwärtsbewegung auch weiterhin in der Richtung rotieren, dass sie zum Frontbereich der Kehrmaschine hin kehrt.

An einem gegenüberliegenden Ende der Kehrwalze 3 ist vorzugsweise ebenfalls eine Kupplungshülse 32 vorgesehen, welche mit einem Antriebsrad 7 ähnlich Fig. 6 zusammenwirkt. Im Unterschied zu dem in Fig. 6 dargestellten Trägerkörper 9 ist der Kupplungsring 8 dabei in einer um 180° gedrehten Ausrichtung eingebaut, sodass die Kupplungsringe 8 beim Einsetzen des Trägerkörpers 9 in die in entgegengesetzte Richtungen weisenden Kupplungshülsen 32 bezüglich einer Mittelebene der Kehrmaschine 1 spiegelbildlich angeordnet sind. Mittels des zweiten Kupplungsrings 8 erfolgt dabei ebenfalls eine Bewegungsübertragung bei einer Vorwärtsbewegung und eine Entkopplung bei einer Rückwärtsbewegung.

## Patentansprüche

1. Handgeführte Kehrmaschine umfassend mindestens ein um eine Drehachse rotierbar gelagertes Kehrmittel, mindestens ein dem mindestens einen Kehrmittel zugeordnetes Antriebsmittel, mittels welchem das Kehrmittel zur Rotation um die Drehachse antreibbar ist, und eine zwischen dem mindestens einen Kehrmittel und dem mindestens einen zugeordneten Antriebsmittel vorgesehene Freilauf-Kupplungseinrichtung, wobei die Freilauf-Kupplungseinrichtung eine Kupplungshülse (25, 29, 32) und einen in der Kupplungshülse (25, 29, 32) für eine unidirektionale Bewegungsübertragung aufgenommen Kupplungsring (5, 6, 8) umfasst, **dadurch gekennzeichnet, dass** der Kupplungsring (5, 6, 8) aus Kunststoff ist und mehrere daran angeformte, elastisch verformbare, in Richtung der Kupplungshülse (25, 29, 32) abragende Lamellen (51, 61, 81) aufweist.

2. Handgeführte Kehrmaschine nach Anspruch 1, **dadurch gekennzeichnet, dass** der Kupplungsring (5, 6, 8) aus einem dauerelastischen Kunststoff ist.

3. Handgeführte Kehrmaschine nach Anspruch 1 oder 2, **dadurch gekennzeichnet, dass** der Kupplungsring (5, 6, 8) mehrere, über den Umfang gleichmäßig verteilte Lamellen (51, 61, 81) aufweist.

4. Handgeführte Kehrmaschine nach Anspruch 1, 2 oder 3, **dadurch gekennzeichnet, dass** die Kupplungshülse (25, 29, 32) radial nach innen ragende Kupplungsnocken (250, 33) aufweist, wobei in einer ersten Relativdrehrichtung die Lamellen (51, 61, 81) die Kupplungsnocken (250, 33) überlaufen und in einer entgegengesetzten zweiten Relativdrehrichtung die Lamellen (51, 61, 81) und die Kupplungsnocken (250, 33) formschlüssig für eine Bewegungs- oder Drehmomentenübertragung zusammenwirken.

5. Handgeführte Kehrmaschine nach einem der Ansprüche 1 bis 4, **dadurch gekennzeichnet, dass** das mindestens eine Kehrmittel als Kehrwalze (3) gestaltet ist.

6. Handgeführte Kehrmaschine nach Anspruch 5, **dadurch gekennzeichnet, dass** die Kupplungshülse (32) einteilig mit der Kehrwalze (3) gestaltet ist.

7. Handgeführte Kehrmaschine nach Anspruch 5 oder 6, **dadurch gekennzeichnet, dass** die Antriebsmittel ein koaxial zu der Kehrwalze (3) angeordnetes, von einem Laufrad (11) der Kehrmaschine (1) und/oder motorisch antreibbares Antriebsrad (7) umfassen, wobei der Kupplungsring (8) drehfest mit dem Antriebsrad (7) verbunden ist.

8. Handgeführte Kehrmaschine nach einem der Ansprüche 1 bis 7, **dadurch gekennzeichnet, dass** das mindestens eine Kehrmittel als Tellerbesen (2) gestaltet ist.

9. Handgeführte Kehrmaschine nach Anspruch 8, **dadurch gekennzeichnet, dass** der Kupplungsring (5, 6) der Freilauf-Kupplungseinrichtung drehfest mit einem Grundkörper (20) des Tellerbesens (2) verbunden ist.

10. Handgeführte Kehrmaschine nach Anspruch 9, **dadurch gekennzeichnet, dass** der Grundkörper (20) einen Verbindungszapfen (200, 201) zur drehfesten Verbindung mit dem Kupplungsring (5, 6) aufweist.

11. Handgeführte Kehrmaschine nach Anspruch 8, 9 oder 10, **dadurch gekennzeichnet, dass** dem Tellerbesen (2) zwei Antriebsmittel (24, 28) zugeordnet sind, wobei zwischen dem Tellerbesen (2) und den zwei zugeordneten Antriebsmitteln (24, 28) jeweils eine Freilauf-Kupplungseinrichtung vorgesehen ist, wobei die Freilauf-Kupplungseinrichtung eine Kupplungshülse (25, 29) und einen in der Kupplungshülse (25, 29) für eine unidirektionale Bewegungsübertragung aufgenommen Kupplungsring (5, 6) mit mindestens einer, vorzugsweise mehreren daran angeformten, elastisch verformbaren, in Richtung der Kupplungshülse (25, 29) abragenden Lamelle(n) (51, 61) umfasst.

12. Handgeführte Kehrmaschine nach Anspruch 11, **dadurch gekennzeichnet, dass** die Freilauf-Kupplungseinrichtungen an gegenüberliegenden Seiten des Grundkörpers (20) des Tellerbesens (2) angeordnet sind.

13. Handgeführte Kehrmaschine nach einem der Ansprüche 8 bis 12, **dadurch gekennzeichnet, dass** das mindestens eine Antriebsmittel eine von einer Laufrolle (22) des Tellerbesens (2) angetriebene Zahnhülse (24) und/oder ein motorisch, insbesondere mittels Elektromotor, angetriebener Zahnkranz (280) umfasst.

14. Verwendung eines Kupplungsrings (5, 6, 8) aus Kunststoff mit daran angeformten, elastisch verformbaren unter einem Winkel abragenden Lamellen (51, 61, 81) in einer Freilauf-Kupplungseinrichtung einer handgeführten Kehrmaschine (1).

## Claims

1. Hand-held sweeping machine, comprising at least one sweeping means mounted to be rotatable about a rotational axis, at least one drive means associated with the at least one sweeping means, by means of which the sweeping means is drivable for rotation about the rotational axis, and a freewheel clutch device provided between the at least one sweeping means and the at least one associated drive means, wherein the freewheel clutch device comprises a coupling sleeve (25, 29, 32) and a coupling ring (5, 6, 8) received in the coupling sleeve (25, 29, 32) for unidirectional transmission of motion, **characterized in that** the coupling ring (5, 6, 8) is made of synthetic material and has a plurality of elastically deformable slats (51, 61, 81) molded thereon and projecting in the direction of the coupling sleeve (25, 29, 32).

2. Hand-held sweeping machine according to claim 1, **characterized in that** the coupling ring (5, 6, 8) is made of a permanently elastic synthetic material.

3. Hand-held sweeping machine according to claim 1 or 2, **characterized in that** the coupling ring (5, 6, 8) has a plurality of slats (51, 61, 81) uniformly distributed about the circumference.

4. Hand-held sweeping machine according to claim 1, 2 or 3, **characterized in that** the coupling sleeve (25, 29, 32) has radially inwards projecting coupling cams (250, 33), wherein in a first relative rotational direction the slats (51, 61, 81) overrun the coupling cams (250, 33) and in an opposite second relative rotational direction the slats (51, 61, 81) and the coupling cams (250, 33) interact in a form-fitting manner for transmission of motion or torque.

5. Hand-held sweeping machine according to any of claims 1 to 4, **characterized in that** the at least one sweeping means is designed as a sweeper roller (3).

6. Hand-held sweeping machine according to claim 5, **characterized in that** the coupling sleeve (32) is designed integrally with the sweeper roller (3).

7. Hand-held sweeping machine according to claim 5 or 6, **characterized in that** the drive means comprise a drive wheel (7) arranged coaxially in relation to the sweeper roller (3) and drivable by a running wheel (11) of the sweeping machine (1) and/or drivable by a motor, wherein the coupling ring (8) is connected to the drive wheel (7) in a rotationally fixed manner.

8. Hand-held sweeping machine according to any of claims 1 to 7, **characterized in that** the at least one sweeping means is designed as plate brushes (2).

9. Hand-held sweeping machine according to claim 8, **characterized in that** the coupling ring (5, 6) of the freewheel clutch device is connected to a base body (20) of the plate brushes (2) in a rotationally fixed manner.

10. Hand-held sweeping machine according to claim 9, **characterized in that** the base body (20) comprises a connecting pin (200, 201) for rotationally fixed connection to the coupling ring (5, 6).

11. Hand-held sweeping machine according to claim 8, 9 or 10, **characterized in that** two drive means (24, 28) are associated with the plate brushes (2), wherein between the plate brushes (2) and the two associated drive means (24, 28) a respective freewheel clutch device is provided, wherein the freewheel clutch device comprises a coupling sleeve (25, 29) and a coupling ring (5, 6) received in the coupling sleeve (25, 29) for unidirectional transmission of motion, said coupling ring having at least one, preferably a plurality of, elastically deformable slat(s) (51, 61) molded thereon and projecting in the direction of the coupling sleeve (25, 29).

12. Hand-held sweeping machine according to claim 11, **characterized in that** the freewheel clutch devices are disposed on opposite sides of the base body (20) of the plate brushes (2).

13. Hand-held sweeping machine according to any of claims 8 to 12, **characterized in that** the at least one drive means comprises a tooth-husk (24) driven by a running roller (22) of the plate brushes (2) and/or a sprocket (280) driven by a motor, in particular by an electric motor.

14. Use of a coupling ring (5, 6, 8) made of synthetic material having elastically deformable slats (51, 61, 81) molded thereon and projecting at an angle in a freewheel clutch device of a hand-held sweeping machine (1).

## Revendications

1. Balayeuse manuelle, comprenant au moins un moyen de balayage supporté à rotation autour d'un axe de rotation, au moins un moyen d'entraînement associé à l'au moins un moyen de balayage, au moyen duquel le moyen de balayage peut être entraîné en rotation autour de l'axe de rotation, et un dispositif d'accouplement en roue libre prévu entre l'au moins un moyen de balayage et l'au moins un moyen d'entraînement associé, le dispositif d'accouplement en roue libre comprenant un manchon d'accouplement (25, 29, 32) et une bague d'accouplement (5, 6, 8) reçue dans le manchon d'accouplement (25, 29, 32) en vue d'un transfert de mouvement unidirectionnel, **caractérisée en ce que** la bague d'accouplement (5, 6, 8) est en plastique et présente plusieurs lamelles (51, 61, 81) façonnées sur celle-ci, déformables élastiquement, faisant saillie dans la direction du manchon d'accouplement (25, 29, 32).

2. Balayeuse manuelle selon la revendication 1, **caractérisée en ce que** la bague d'accouplement (5, 6, 8) est en plastique durablement élastique.

3. Balayeuse manuelle selon la revendication 1 ou 2, **caractérisée en ce que** la bague d'accouplement (5, 6, 8) présente plusieurs lamelles (51, 61, 81) réparties uniformément sur la périphérie.

4. Balayeuse manuelle selon la revendication 1, 2 ou 3, **caractérisée en ce que** le manchon d'accouplement (25, 29, 32) présente des cames d'accouplement (250, 33) faisant saillie radialement vers l'intérieur, les lamelles (51, 61, 81) passant par-dessus les cames d'accouplement (250, 33) dans un premier sens de rotation relatif et les lamelles (51, 61, 81) et les cames d'accouplement (250, 33) coopérant par engagement par correspondance de formes en vue d'un transfert de mouvement ou de couple dans un deuxième sens de rotation relatif opposé.

5. Balayeuse manuelle selon l'une quelconque des revendications 1 à 4, **caractérisée en ce que** l'au moins un moyen de balayage est configuré sous forme de rouleau de balayage (3).

6. Balayeuse manuelle selon la revendication 5, **caractérisée en ce que** le manchon d'accouplement (32) est configuré d'une seule pièce avec le rouleau de balayage (3).

7. Balayeuse manuelle selon la revendication 5 ou 6, **caractérisée en ce que** les moyens d'entraînement comprennent une roue d'entraînement (7) disposée coaxialement au rouleau de balayage (3), pouvant être entraînée par une roue mobile (11) de la balayeuse (1) et/ou par un moteur, la bague d'accouplement (8) étant connectée de manière solidaire en rotation à la roue d'entraînement (7).

8. Balayeuse manuelle selon l'une quelconque des revendications 1 à 7, **caractérisée en ce que** l'au moins un moyen de balayage est configuré sous forme de balai latéral (2).

9. Balayeuse manuelle selon la revendication 8, **caractérisée en ce que** la bague d'accouplement (5, 6) du dispositif d'accouplement en roue libre est connectée de manière solidaire en rotation à un corps de base (20) du balai latéral (2).

10. Balayeuse manuelle selon la revendication 9, **caractérisée en ce que** le corps de base (20) présente un tourillon de connexion (200, 201) pour la connexion solidaire en rotation à la bague d'accouplement (5, 6).

11. Balayeuse manuelle selon la revendication 8, 9 ou 10, **caractérisée en ce que** deux moyens d'entraînement (24, 28) sont associés au balai latéral (2), un dispositif d'accouplement en roue libre étant à chaque fois prévu entre le balai latéral (2) et les deux moyens d'entraînement associés (24, 28), le dispositif d'accouplement en roue libre comprenant un manchon d'accouplement (25, 29) et une bague d'accouplement (5, 6) reçue dans le manchon d'accouplement (25, 29) pour un transfert de mouvement unidirectionnel, avec au moins une, de préférence plusieurs, lamelles (51, 61) façonnées sur celle-ci, déformables élastiquement, faisant saillie dans la direction du manchon d'accouplement (25, 29).

12. Balayeuse manuelle selon la revendication 11, **caractérisée en ce que** les dispositifs d'accouplement en roue libre sont disposés sur des côtés opposés du corps de base (20) du balai latéral (2).

13. Balayeuse manuelle selon l'une quelconque des revendications 8 à 12, **caractérisée en ce que** l'au moins un moyen d'entraînement comprend un manchon denté (24) entraîné par un galet (22) du balai latéral (2) et/ou une couronne dentée (280) entraînée par un moteur, en particulier au moyen d'un moteur électrique.

14. Utilisation d'une bague d'accouplement (5, 6, 8) en plastique avec des lamelles (51, 61, 81) façonnées sur celle-ci, déformables élastiquement et faisant saillie suivant un certain angle, dans un dispositif d'accouplement en roue libre d'une balayeuse manuelle (1).
